Europäisches Patentamt

European Patent Office

Office européen des brevets

(19)

(11) Numéro de publication: **0 369 372**
**A1**

## (12) DEMANDE DE BREVET EUROPEEN

(21) Numéro de dépôt: 89120991.8

(51) Int. Cl.5: **H04B 17/02**

(22) Date de dépôt: **13.11.89**

(30) Priorité: 16.11.88 FR 8814880

(43) Date de publication de la demande:
23.05.90 Bulletin 90/21

(84) Etats contractants désignés:
**DE ES FR GB IT NL SE**

(71) Demandeur: **ALCATEL TRANSMISSION PAR FAISCEAUX HERTZIENS A.T.F.H.**
**55, rue Greffulhe**
**F-92301 Levallois-Perret Cédex(FR)**

(72) Inventeur: **Peruyero, Michel**
**1, rue Jouffroy**
**F-75017 Paris(FR)**

(74) Mandataire: **Weinmiller, Jürgen et al**
**Lennéstrasse 9 Postfach 24**
**D-8133 Feldafing(DE)**

(54) **Procédé de sécurisation des trains auxiliaires insérés-extraits dans une station quelconque le long d'une artère hertzienne numérique.**

(57) L'invention concerne un procédé de sécurisation de trains auxiliaires insérés-extraits dans une station quelconque (52) le long d'une artère hertzienne numérique, dans lequel on effectue un calcul de redondance sur le signal principal, dans chacune des stations intermédiaires, afin d'élaborer des informations de qualité bond par bond que l'on retransmet dans la trame hertzienne afin de récupérer en tout point de la liaison hertzienne les informations de qualité de tous les bonds en amont.
Application notamment au domaine des faisceaux hertziens.

## FIG. 1

## Procédé de sécurisation des trains auxiliaires insérés-extraits dans une station quelconque le long d'une artère hertzienne numérique

L'invention concerne un procédé de sécurisation des trains auxiliaires insérés-extraits dans une station quelconque le long d'une artère hertzienne numérique.

Dans le domaine des faisceaux hertziens numériques, le multiplexage de trame permet de transmettre, le long d'un canal hertzien, un train principal (par exemple une liaison 140 Mbit/s) et un certain nombre de trains auxiliaires (2 Mbit/s, 704 Kbit/s...). De même le train principal peut être constitué de plusieurs affluents (dans le cadre par exemple d'une liaison 4x34 Mbit/s). Lors d'une transmission hertzienne le long de plusieurs bonds radio-électriques, il est souvent intéressant d'extraire puis de réinsérer (dropping) l'un quelconque des trains auxiliaires ou l'un des affluents du train principal. Il s'agit par exemple de la desserte en télécommunication d'une ville de moyenne importance le long d'une artère hertzienne reliant deux centres plus globaux. Ces trains auxiliaires ou affluents sont généralement transmis d'une manière redondante (par exemple sur deux canaux radio-électriques).

Le procédé de l'invention est un procédé d'élaboration de critères de qualité nécessaires à la sécurisation de ces insertions-extractions.

Dans les faisceaux hertziens numériques actuels, il est nécessaire d'ajouter au signal incident (train principal par exemple à 140 Mbit/s) un certain nombre d'informations supplémentaires nécessaires au calcul de la qualité de la liaison fournie. Pour cela on utilise généralement une méthode de constitution d'une trame hertzienne, par exemple la méthode dite "à justification positive". On dispose alors d'un certain nombre de bits supplémentaires dits "extra-bits", propres à l'exploitation du faisceau hertzien, regroupés sous la forme :
- d'un mot de verrouillage de trame MVT ;
- d'un mot de redondance calculé sur un certain nombre de bits de message transmis, repérés par ce mot MVT.

On peut alors proposer de la même manière des services supplémentaires tels que :
- transmission de voies de service (32 kbit/s, 64 kbit/s..),
- transmission d'affluent(s) supplémentaire(s) (2 Mbit/s),
utilisables par le client.

On utilise alors les canaux hertziens de manière redondante (généralement en $N+1$ canaux : soient $N$ canaux normaux et un canal secours) afin de pallier des problèmes éventuels de propagation. Dans un tel système, l'information de redondance de liaison émise Rle est insérée dans la trame hertzienne pour être extraite en réception sous forme d'une information de redondance liaison reçue Rlr. On calcule alors, en local, une nouvelle redondance liaison Rl sur les trains reçus afin de détecter d'éventuelles erreurs de propagation. Un système de commutation automatique permet alors de sécuriser un éventuel canal défaillant par transmission de celui-ci sur le canal secours, ces commandes s'effectuant via une voie de service généralement appelée voie d'ordre de commutation.

Un exemple de redondance est donné par le calcul de parité suivant :

$$\text{Ple} = \underset{\text{modulo 2}}{\sum} \quad \text{bits transmis sur une trame}$$

Dans ce cas une erreur est détectée par :

$$Q_t = \text{Rlr} \oplus \text{Rl} = \text{Plr} \oplus \text{Pl} = \text{DPL}$$

$Q_t$ étant l'information de qualité sur la liaison totale que l'on appelle dans ce cas divergence de parité liaison DPL, Ple étant la parité liaison émise et Plr la parité liaison reçue.

On a alors de façon statistique, un taux d'erreur binaire estimé sur la liaison TEB directement en correspondance avec le taux de divergence de parité TDPL. On élabore alors des critères de commutation fonctions de ce taux TEB : on sécurise dans ce cas le train principal sur le taux d'erreur (qualité). l'information de redondance peut être également celle utilisée pour un code correcteur d'erreur par exemple.

L'objet de l'invention est de sécuriser les trains auxiliaires ou affluents qui sont insérés-extraits dans les stations intermédiaires : c'est par exemple le cas d'un "dropping" à 34 Mbit/s sur une liaison principale à 4x34 Mbit/s ou le cas de trains supplémentaires à 2 Mbit/s.

L'invention propose, à cet effet un procédé de sécurisation de trains auxiliaires insérés-extraits dans une station quelconque le long d'une artère hertzienne numérique, caractérisé en ce que l'on effectue un calcul de redondance sur le signal principal, dans chacune des stations intermédiaires, afin d'élaborer des informations de qualité bond par bond que l'on retransmet dans la trame hertzienne afin de récupérer en tout point de la liaison hertzienne les informations de qualité de tous les bonds en amont.

L'invention permet alors d'obtenir :

- des informations de taux d'erreur et non uniquement de coupure du signal transmis ;
- la valeur de ce taux d'erreur ;
- une estimation sur la section réelle de commutation du signal inséré-extrait.

L'invention permet, en effet, d'obtenir une sécurisation sur la qualité du signal transmis et non pas seulement sur sa disponibilité. De plus elle permet d'obtenir une estimation rapide du taux d'erreur binaire concernant ces trains auxiliaires ou ces affluents qui est calculée à partir des informations de redondance définies pour la commutation du signal principal. Enfin, elle permet de prendre en compte la section réelle de commutation du train qui est inséré-extrait, et non pas seulement la section globale du train principal. Pour ce faire elle s'appuie sur la constitution d'un multiplex de qualité bond par bond construit le long de l'artère hertzienne et pour un sens de transmission ; ce multiplex étant inséré de façon systématique dans la trame hertzienne de chacun des canaux radio-électriques.

Les caractéristiques et avantages de l'invention ressortiront d'ailleurs de la description qui va suivre, à titre d'exemple non limitatif, en référence aux figures annexées sur lesquelles :

- les figures 1 et 2 illustrent le procédé selon l'invention ;
- la figure 3 illustre un exemple de mise en oeuvre du procédé selon l'invention.

Le procédé de l'invention est un procédé de sécurisation des trains auxiliaires ou affluents insérés ou extraits dans une station quelconque le long d'une artère hertzienne numérique qui comporte un train principal et un (ou plusieurs) trains auxiliaires, ou un train principal formé de plusieurs affluents.

Pour réaliser cette sécurisation on effectue un calcul de redondance sur le signal principal, dans chacune des stations intermédiaires, afin d'élaborer des informations de qualité bond par bond que l'on retransmet dans la trame hertzienne afin de récupérer, en tout point de la liaison hertzienne, les informations de qualité de tous les bonds en amont. On obtient ainsi une information de qualité TEB, dont le calcul est rapide car effectué sur un signal à fréquence généralement beaucoup plus importante : Le calcul d'un taux d'erreur binaire estimé, sur un signal de 140 Mbit/s par exemple, est bien plus rapide que celui qui serait effectué de la même manière sur un signal de 2 Mbit/s par exemple. Disposant de l'information de qualité sur tous les bonds on peut alors étudier la qualité sur une section quelconque désirée correspondant à un certain nombre de bonds.

Le procédé de l'invention consiste alors à réserver dans la trame hertzienne, parmi les extra-bits, un certain nombre d'emplacements pré-établis, ce qui permet d'insérer, au fur et à mesure, les informations de qualité bond par bond. Il existe donc en fonction de ce nombre d'emplacements pré-établis une valeur maximale de bonds possibles.

De plus on utilise un second bit de redondance, appelé redondance de bond émis Rbe, calculé sur le train principal de la même manière que l'information de redondance liaison. Toutefois celui-ci est modifié (recalculé) dans chaque station intermédiaire alors que dans les dispositifs de l'art connu l'information sur la liaison est transparente aux nombres de bonds.

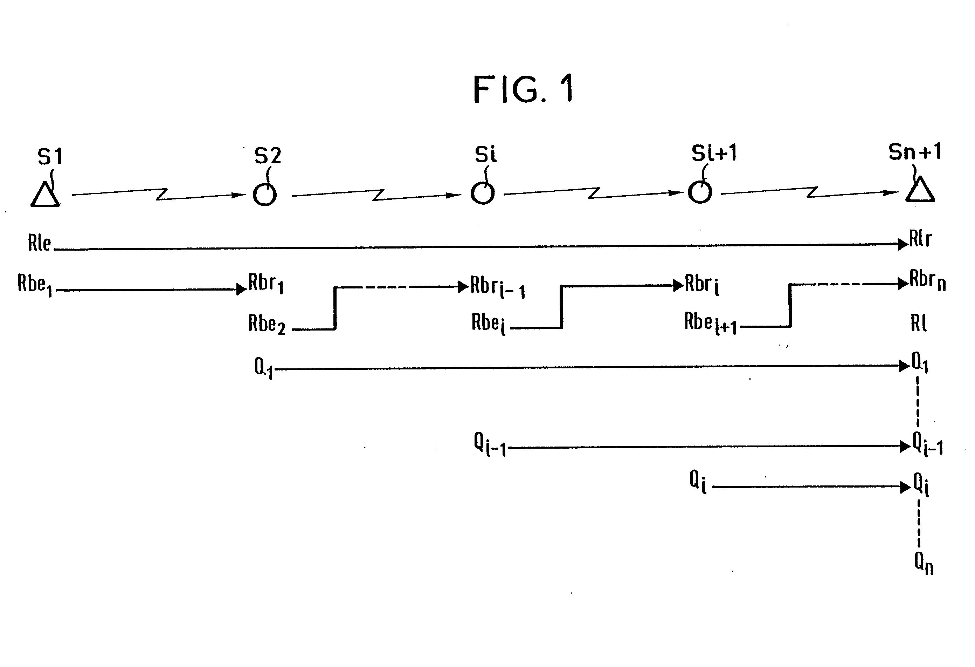

Si l'on considère à priori un sens de transmission de la station S1 vers la station Sn + 1, la constitution du multiplex de qualité s'effectue alors de la manière suivante, comme illustré à la figure 1.

. Dans la station 1 (station terminale S1) :

- on calcule la redondance de bond émis $Rbe_1$ que l'on transmet dans la trame hertzienne.

. Dans la station 2 (S2) :

- on extrait l'information de redondance émise précédemment, sous la forme d'une redondance bond reçue $Rbr_1$. Celle-ci n'est différente de la redondance de bond émis $Rbe_1$ que dans le cas où il y a eu une erreur de propagation sur le bit lui-même.
- on calcule, en local, une nouvelle information de redondance émise $Rbe_2$ que l'on transmet dans le même emplacement de la trame hertzienne que l'information $Rbe_1$. Cette information $Rbe_2$ n'est différente de l'information $Rbe_1$ que s'il y a eu des erreurs dans la propagation sur le train transmis.
- On calcule alors l'information de qualité Q1 fonction de $Rbe_2$ et de $Rbr_1$, qui représente la qualité du bond

3

EP 0 369 372 A1

1. On insère alors cette information dans un emplacement réservé de la trame hertzienne.

. Dans une station i (Si) quelconque :

- on extrait l'information $Rbr_{i-1}$.
- on calcule en local l'information $Rbe_i$ que l'on transmet au même emplacement que l'information $Rbe_{i-1}$ - (blanchissement).
- on élabore l'information de qualité $Q_{i-1} = f (Rbr_{i-1}, Rbe_i)$ qui est représentative de la qualité du bond i-1 (et non de la qualité jusqu'au bond i-1), le bit de redondance du bond étant recalculé dans chaque station intermédiaire. On transmet alors dans un nouvel emplacement réservé de la trame hertzienne cette information $Q_{i-1}$.

. Dans la station n + l (station terminale Sn + 1).

- on extrait les informations Rlr et $Rbr_n$.
- on calcule en local ce que l'on peut appeler l'information $Rbe_{n+1}$ ou Rl (ou Information de redondance sur la liaison totale).
- on élabore alors l'information de qualité $Q_n$ :
$Q_n = f (Rbr_n, Rbe_{n+1})$
ou $Q_t = f (Rlr, Rl)$
correspondant respectivement à la qualité du bond n et à celle de la liaison totale que l'on insère dans le multiplex de qualité.

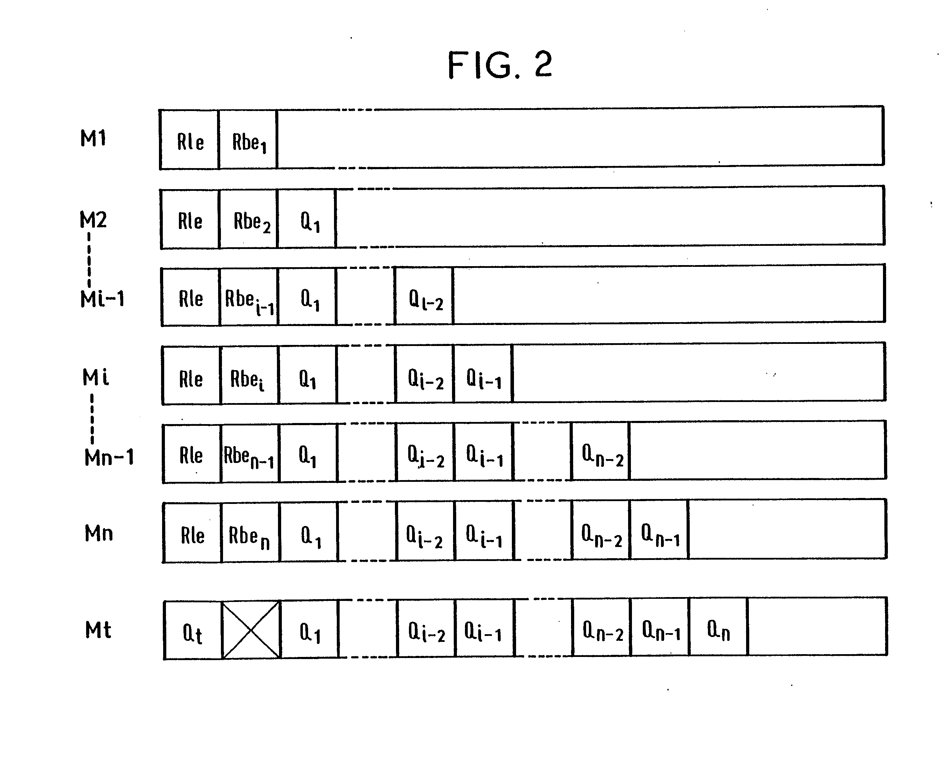

La constitution du multiplex de qualité est illustrée sur la figure 2. On a les différents multiplex : M1 vers le bond 1, M2 vers le bond 2, Mi-1 vers le bond i-1, Mi vers le bond i, Mn vers le bond n et Mt dans la station terminale.

On dispose alors dans une station quelconque i + 1 des informations de qualité de tous les bonds en amont 1 à i. On peut élaborer dans cette station une information de qualité partielle $Q_{NM}$ correspondant à la qualité de la liaison du bond N au bond M avec :
1 N M i (généralement M = i)
$Q_{NM} = g (Q_N, Q_{N+1},..., Q_M)$.

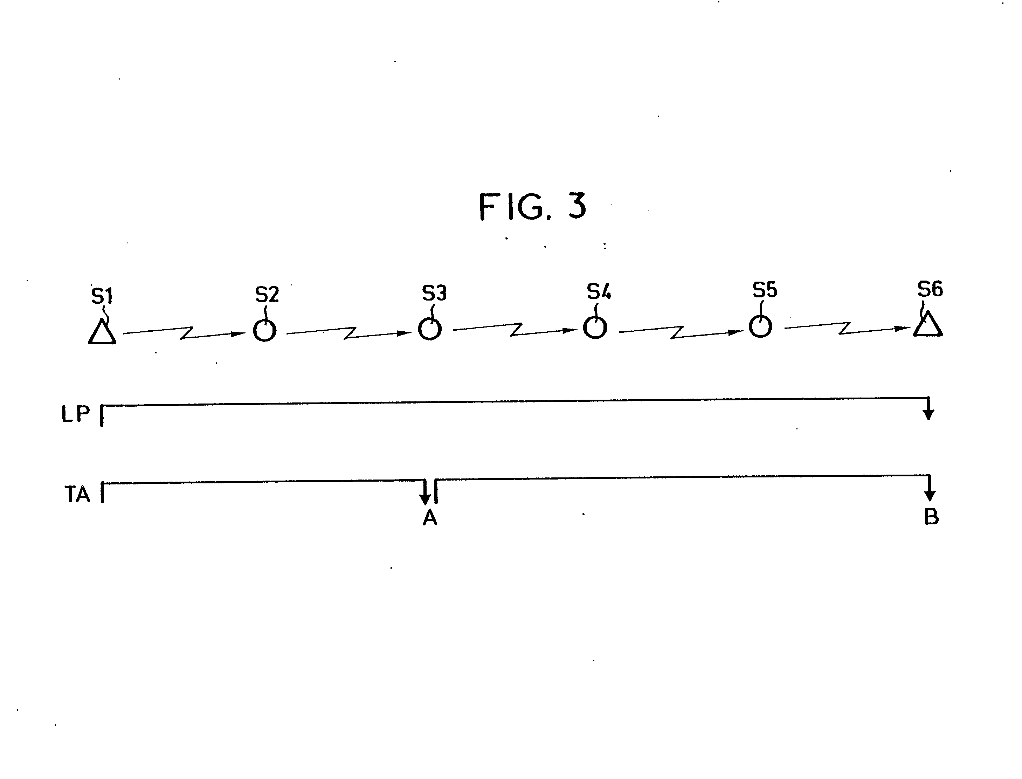

Dans un exemple d'application, illustré sur la figure 3, on considère le procédé de l'invention pour un calcul de parité : on élabore ainsi une information de qualité nécessaire à la commutation d'un affluent ou train auxiliaire TA à 2 Mbit/s inséré-extrait au point A dans la station 3, le long d'une liaison hertzienne principale LP à 140 Mbit/s par exemple. Les fonctions f et g définies précédemment ($Q_t = f (Rlr, Rl)$ ; $Q_{NM} = g (Q_N, Q_{N+1}, ... Q_M)$) sont alors de simples fonctions OU exclusives.

En effet si on suppose, pour simplifier l'écriture, qu'il n'y a pas d'erreur sur les bits du multiplex de qualité lui-même on a :
$Pbe_1 = \oplus$ aie ; aie bits de la trame émis
$Pbe_2 = \oplus$ air ; air bits de la trame reçus
$Q_1 = DPB1 = f (Pbe_2, Pbe_1) = Pbe_1 \oplus Pbe_2$
avec DPB1 divergence de parité du bond 1
de même $Q_2 = DPB2 = f (Pbe_2, Pbe_3) = Pbe_2 \oplus Pbe_3$

De façon théorique la qualité $Q_{1,2}$ correspondant à la section réelle de commutation du premier train à 2 Mbit/s inséré dans la station 1 et extrait-inséré dans la station 3 est de la forme :
$Q_{1,2} = Pbe_3 \oplus Pbe_1$
soit
$Q_{1,2} = Pbe_3 \oplus Pbe_2 \oplus Pbe_2 \oplus Pbe_1 = (Pbe_3 \oplus Pbe_2) \oplus (Pbe_1 \oplus Pbe_2)$
$Q_{1,2} = g (Q_1, Q_2) = g (DP1, DP2)$
$Q_{1,2} = DP1 \oplus DP2 = DP_{NM}$ .

On peut alors élaborer un critère de commutation correspondant à cette qualité. Ainsi on obtient :
- au point A :
. un critère de qualité du train TA à 2 Mbit/s qui s'établit en partant de la formule : f (Q1, Q2) = DP1 $\oplus$ DP2 ;
- au point B :
. un critère de qualité du train LP à 140 Mbit/s qui s'établit à partir de la formule : Qt = DPt (DPt = divergence de parité sur la liaison totale) ;
. un critère de qualité du train TA à 2 Mbit/s qui s'établit à partir de la formule : g (Q3, Q4, Q5) = DP3 $\oplus$ DP4 $\oplus$ DP5.

4

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Ainsi le calcul de redondance sur le signal principal peut être un calcul de parité mais aussi un calcul de syndrome d'un code détecteur et/ou correcteur d'erreurs.

Ainsi le bit de redondance de bond émis peut être obtenu par un calcul de parité mais aussi par un calcul de syndrome d'un code détecteur et/ou correcteur d'erreur.


## Revendications

1/ Procédé de sécurisation de trains auxiliaires insérés-extraits dans une station quelconque le long d'une artère hertzienne numérique, caractérisé en ce que l'on effectue un calcul de redondance sur le signal principal, dans chacune des stations intermédiaires, afin d'élaborer des informations de qualité bond par bond que l'on retransmet dans la trame hertzienne afin de récupérer en tout point de la liaison hertzienne les informations de qualité de tous les bonds en amont.

2/ Procédé selon la revendication 1, caractérisé en ce qu'on réserve dans la trame hertzienne parmi les extra-bits un certain nombre d'emplacements pré-établis, ce qui permet d'insérer, au fur et à mesure, les informations de qualité bond par bond.

3/ Procédé selon l'une quelconque des revendications 1 ou 2, caractérisé en ce qu'on utilise un second bit de redondance appelé redondance de bond émis (Rbe) calculé sur le train principal qui est recalculé dans chaque station intermédiaire.

4/ Procédé selon l'une quelconque des revendications précédentes, caractérisé en ce que :
- dans la première station :
. on calcule la redondance de bond émis ($Rbe_1$) que l'on transmet dans la trame hertzienne ;
- dans chacune des stations intermédiaires :
. on extrait l'information de redondance émise par la station précédente sous la forme d'une information de redondance de bond reçue ($Rbr_{i-1}$) ;
. on calcule, en local, une nouvelle information de redondance émise ($Rbe_i$) que l'on transmet dans le même emplacement de la trame hertzienne que l'information de redondance de bond reçue ($Rbr_{i-1}$) ;
on calcule alors l'information de qualité $Q_{i-1}$ qui représente la qualité du bond i-1 ;
. on insère alors cette information dans un emplacement réservé de la trame hertzienne.

5/ Procédé selon l'une quelconque des revendications précédentes, caractérisé en ce que le calcul de redondance sur le signal principal est un calcul de parité.

6/ Procédé selon l'une quelconque des revendications précédentes, caractérisé en ce que le bit de redondance de bond émis est obtenu par un calcul de parité.

7/ Procédé selon l'une quelconque des revendications 1 à 4, caractérisé en ce que le calcul de redondance sur le signal principal est un calcul de syndrome d'un code détecteur et/ou correcteur d'erreur-(s).

8/ Procédé selon la revendication 7, caractérisé en ce que le bit de redondance de bond émis est obtenu par un calcul de syndrome d'un code détecteur et/ou correcteur d'erreur(s).

FIG. 1

# FIG. 2

| M1 | Rle | Rbe$_1$ | | | | | | | | | | |

| M2 | Rle | Rbe$_2$ | Q$_1$ | | | | | | | | |

| Mi-1 | Rle | Rbe$_{i-1}$ | Q$_1$ | | Q$_{i-2}$ | | | | | | |

| Mi | Rle | Rbe$_i$ | Q$_1$ | | Q$_{i-2}$ | Q$_{i-1}$ | | | | |

| Mn-1 | Rle | Rbe$_{n-1}$ | Q$_1$ | | Q$_{i-2}$ | Q$_{i-1}$ | | Q$_{n-2}$ | | |

| Mn | Rle | Rbe$_n$ | Q$_1$ | | Q$_{i-2}$ | Q$_{i-1}$ | | Q$_{n-2}$ | Q$_{n-1}$ | |

| Mt | Q$_t$ | ⊠ | Q$_1$ | | Q$_{i-2}$ | Q$_{i-1}$ | | Q$_{n-2}$ | Q$_{n-1}$ | Q$_n$ |

EP 0 369 372 A1

# FIG. 3

EP 0 369 372 A1

## DOCUMENTS CONSIDERES COMME PERTINENTS ·

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 976 835 (LARNER)<br>* Figure 1; colonne 1, lignes 8-15; colonne 3, ligne 36 - colonne 4, ligne 3; colonne 6, lignes 3-8; colonne 6, lignes 18-37 *<br>--- | 1-8 | H 04 B 17/02 |
| A | GB-A-1 420 078 (GEC)<br>* Page 1, lignes 11-33; page 2, lignes 98-129 *<br>--- | 1-8 | |
| A | THE POST OFFICE ELECTRICAL ENGINEERS JOURNAL, vol. 74, no. 4, janvier 1982, pages 335-344, Old Working, Surrey, GB; T.C. WRIGHT et al.: "8.448 Mbit/s digital line systems on carrier cables"<br>* Page 336, colonne de droite, lignes 32-43; figure 2; tableau 2; page 336, colonne de droite, lignes 50-68 *<br>--- | 1-8 | |
| A | DE-A-3 310 795 (SIEMENS)<br>* Abrégé; page 7, ligne 1 - page 10, ligne 20 *<br>----- | 1-4 | **DOMAINES TECHNIQUES RECHERCHES (Int. Cl.5)**<br><br>H 04 B<br>H 04 J<br>H 04 L |

Le présent rapport a été établi pour toutes les revendications

| Lieu de la recherche | Date d'achèvement de la recherche | Examinateur |
|---|---|---|
| LA HAYE | 25-01-1990 | GOUDELIS M. |